# EUROPEAN PATENT SPECIFICATION

(11) **EP 2 581 807 B1**
(45) Date of publication and mention of the grant of the patent: **20.03.2019**
(21) Application number: 11185204.2
(22) Date of filing: 14.10.2011
(51) Int. Cl.: G06F 3/01

(54) **Tactile indicator for a portable electronic device**
Tastindikator für tragbare elektronische Vorrichtung
Indicateur tactile pour dispositif électronique portable

(43) Date of publication of application: 17.04.2013
(73) Proprietor: BlackBerry Limited, Waterloo, ON N2K 0A7 (CA)
(72) Inventor: Ladouceur, Norman, Miner, Wingham, Ontario N0G 2W0 (CA); Fyke, Steven, Henry, Waterloo, Ontario N2L 3W8 (CA); Griffin, Jason, Tyler, Waterloo, Ontario N2L 3W8 (CA)
(74) Representative: MERH-IP Matias Erny Reichl Hoffmann Patentanwälte PartG mbB

(56) References cited:
- US-A1- 2006 024 647
- US-A1- 2007 211 032
- US-A1- 2008 122 589
- US-A1- 2010 001 849
- US-A1- 2010 085 168
- US-A1- 2010 315 212

## Description

### TECHNICAL FIELD

The present application relates to tactile indicators for indicating a status of a portable electronic device.

### BACKGROUND DISCUSSION

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, tablets and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs, smart telephones or tablets are generally intended for handheld use and ease of portability.

US2010/0001849 discloses a portable terminal configured to inform a user of status information via vibration patterns. US2010/0315212 discloses a user interface comprising a tactile surface arranged to convey a tactile representation based on visual content displayed on a display.

US2006/0024647 discloses apparatus for providing haptic feedback for enabling a visually impaired person to mentally visualize an image.

US2010/0085168 discloses a tactile simulation device suitable for portable apparatuses for reproducing textures and Braille letters, US2007/0211032 discloses a tactile transmission device including a plurality of cells arranged at regular intervals, US2008/0122589 discloses a tactile output device Including an electro-active polymer layer which may be expanded and contracted by proximate conductors to produce a three dimensional contoured surface corresponding to an image,

### SUMMARY

The subject-matter for which protection is sought is defined by the subject-matter according to the independent claims.

Preferred embodiments are specified in the dependent claims.

In an aspect of the disclosure there is provided a method including: determining a status associated with a function of a portable electronic device; and actuating a tactile status indicator to change a texture at a surface of the portable electronic device for a period of time to indicate the status,

In another aspect of the disclosure there is provided a portable electronic device including; a housing; a processor for executing a program stored in memory to determine a status associated with a function of the portable electronic device; and a tactile status indicator for changing a texture of a surface of the housing for a period of time to indicate the status.

In another aspect of the disclosure there is provided a tactile status indicator of a portable electronic device, the tactile indicator including: a projection movable relative to a housing of the portable electronic device, the projection being at least partly aligned with an opening of the housing; a driving mechanism for moving the projection; wherein actuation of the tactile status indicator changes a texture at the surface of the portable electronic device for a period of time to indicate a status of a function of the portable electronic device. In one embodiment, the driving mechanism is a solenoid switch, an electromechanical cam or a hydraulic pump.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the attached Figures, wherein:
FIG. 1 is a simplified block diagram of one example of a portable electronic device in accordance with the present disclosure;
FIG. 2 is block diagram of components for implementing a method in accordance with the present disclosure;
FIGS. 3A, 3B and 3C are schematic side sectional views of example tactile status indicators of a portable electronic device;
FIG. 4 is a flow chart illustrating an example method of indicating a status at a portable electronic device, in accordance with the disclosure;
FIG. 5 is an isometric rear view of an example portable electronic device;
FIG. 6A is an isometric rear view of another example portable electronic device;
FIG. 6B is a schematic isometric rear view of the portable electronic device of FIG. 6A;
FIG. 7 is an isometric rear view of another example portable electronic device;
FIG. 8 is an isometric rear view of another example portable electronic device;
FIG. 9 is an isometric front view of an example portable electronic device; and
FIG. 10 is flow chart illustrating another example method of indicating a status at a portable electronic device, in accordance with the disclosure.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

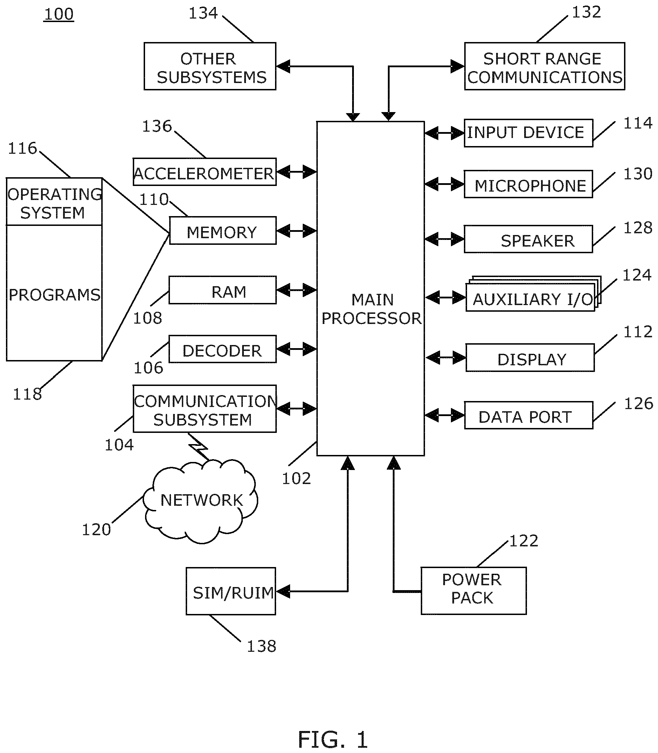

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 120. The wireless network 120 may be any type of wireless network, including, but not limited to, data wireless networks, voice wireless networks, and networks that support both voice and data communications.

The processor 102 interacts with other components, such as Random Access Memory (RAM) 108, memory 110, an input device 114, such as a keyboard, device buttons or navigation devices, for example, an auxiliary input/output (I/O) subsystem 124, a data port 126, a speaker 128, a microphone 130, short-range communications 132, and other device subsystems 134. The processor 102 may interact with an orientation sensor such as an accelerometer 136 that may be utilized to detect direction of gravitational forces or gravity-induced reaction forces. A power pack 122, such as one or more rechargeable batteries or a port to an external power supply, powers the portable electronic device 100.

The processor 102 further interacts with a display 112, which may be a liquid crystal display (LCD) or other non touch-sensitive display. Alternatively, the display 112 may be a touch-sensitive display. The touch-sensitive display may be capacitive, resistive, infrared, a surface acoustic wave (SAW) touch-sensitive display, strain gauge, optical imaging, dispersive signal technology or acoustic pulse recognition, for example.

To identify a subscriber for network access, the portable electronic device 100 uses a Subscriber Identity Module or a Removable User Identity Module (SIM/RUIM) card 138 for communication with a network, such as the wireless network 120. Alternatively, user identification information may be programmed into memory 110.

The portable electronic device 100 includes an operating system 116 and software programs or components 118 that are executed by the processor 102 and are typically stored in a persistent, updatable store such as the memory 110. Additional applications or programs may be loaded onto the portable electronic device 100 through the wireless network 120, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 120 through the communication subsystem 104. For voice communications, the overall operation of the portable electronic device 100 is similar. The speaker 128 outputs audible information converted from electrical signals, and the microphone 130 converts audible information into electrical signals for processing.

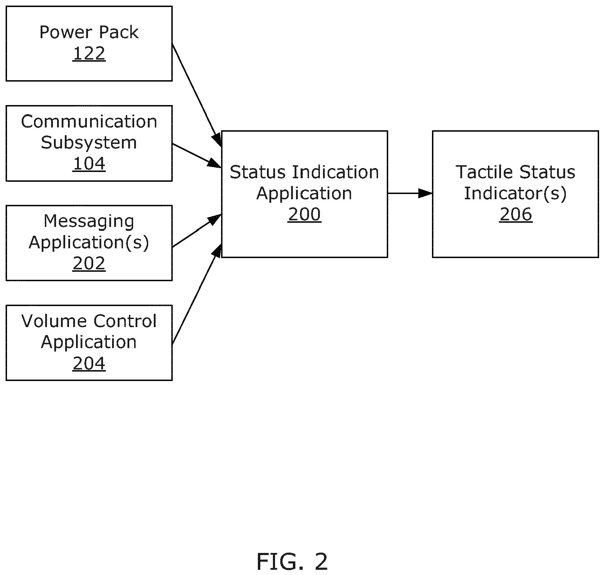

Referring to FIG. 2, a status indication application 200 is in electrical communication with the power pack 122, the communication subsystem 104, a messaging application(s) 202 and a volume control application 204 to receive status information directly or indirectly therefrom. The status application 200 may be computer-readable code executable by at least one processor of the portable electronic device to perform the method and may be stored in a computer-readable medium, such as a non-transitory computer-readable medium.

The status indication application 200 is also in electrical communication with a tactile status indicator 206. The tactile status indicator 206 includes a driving mechanism and at least one projection that is movable relative to a housing of the portable electronic device 100. The tactile status indicator 206 is at least partly aligned with one or more openings through a surface of the housing of the portable electronic device 100. The at least one projection is movable relative to the surface of the housing to change a texture at the surface, which may be tactilely detected by a user. Tactile status indicators may indicate a level associated with a device function or may indicate a state, such as "on", "off", "yes" or "no", for example.

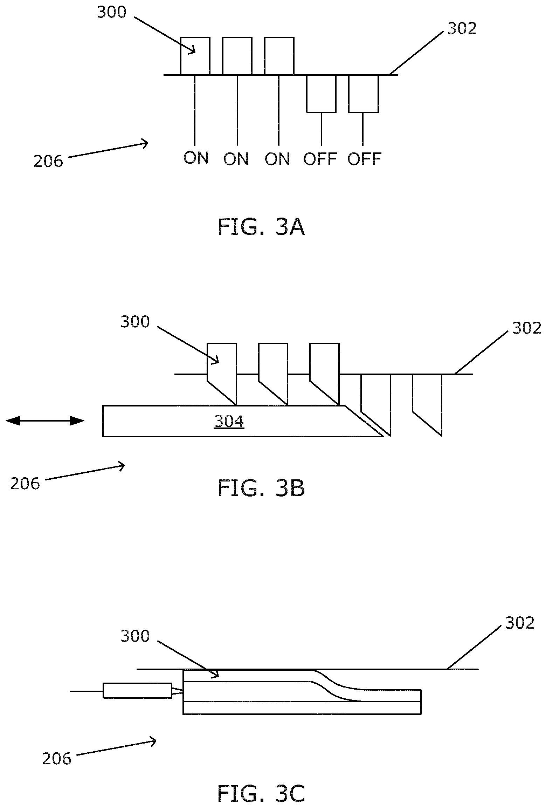

Referring to FIGS. 3A, 3B and 3C, some examples of tactile status indicators 206 are shown. In FIG. 3A, projections 300 are actuated by solenoid switches to raise and lower in response to an electrical current. The projections 300 may be flush with the surface 302 of the housing of the device 100 when in a starting position and moved to a position that is tactilely detectable by a user when actuated. The projections 300 form bars of a gauge to indicate status as a level. In the example of FIG. 3A, the user is able to touch the projections 300 and determine that the status of the function indicated is at approximately 60 percent, since three of the five projections are in the "on" position. In FIG. 3B, the projections 300 are actuated by an electromechanical cam 304 positioned below the projections 300. The electromechanical cam 304 sequentially forces the projections 300 from a starting position, which may be flush with the surface 302,to a tactilely detectable position above the surface 302. In FIG. 3C, a tube, or chamber, that is filled by a micro fluid power hydraulic pump functions as a single projection 300 that shortens and/or lengthens to indicate a status. Similar to FIG. 3A, the tactile status indicators 206 of FIGS. 3B and 3C are also gauges, which tactilely indicate a level to the user.

The tactile status indicator 206 may be a single projection that is movable from a starting position to a tactilely detectable position in order to indicate a status. Alternatively other mechanisms capable of changing a texture at a surface for a period of time may be used. The portable electronic device may include any number of tactile status indicators 206 at different housing surface locations. The tactile status indicators 206 may be gauges, individual projections or a combination of both. Although the status indicators are shown as projections, the status indicators may instead be depressions or a combination of depressions and projections, for example.

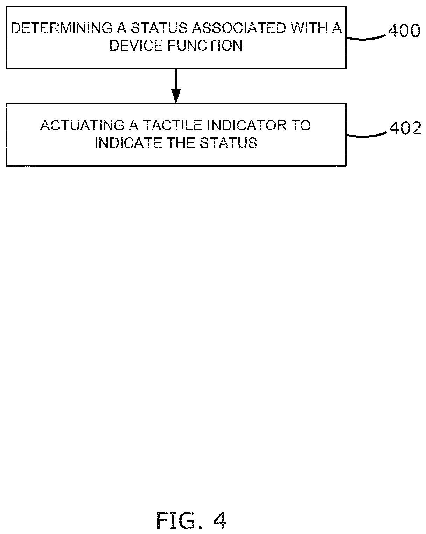

A flow chart illustrating an example method of indicating a status at the portable electronic device 100 is shown in FIG. 4. The steps of FIG. 4 may be carried out by routines or subroutines of software executed by, for example, the processor 102. Coding of software for carrying out such steps is well within the scope of a person of ordinary skill in the art given the present description.

The status indication application 200 determines at 400 a status associated with a device function. The device function may be communication with a wireless network, powering the portable electronic device 100, volume control or electronic messaging, for example. When the status has been determined at 400, the tactile status indicator 206 is actuated at 402 to indicate a status by changing a texture at the surface of the portable electronic device 100 for a period of time.

The status may be determined according to a status determination schedule, which may be set at regular intervals, for example. The schedule may be set by the manufacturer and may be customizable by the user. Alternatively, the status may be determined when a user is on a telephone call or when there is a change in a device function. In addition, the status may be determined when a device function may be compromised as a result of a change, such as when there is a rapid reduction in the antenna strength or when the battery level is very low, for example.

The period of time may begin when a first status is determined and end when there is a change in the status. The period of time may be when a telephone application is active during a telephone call.

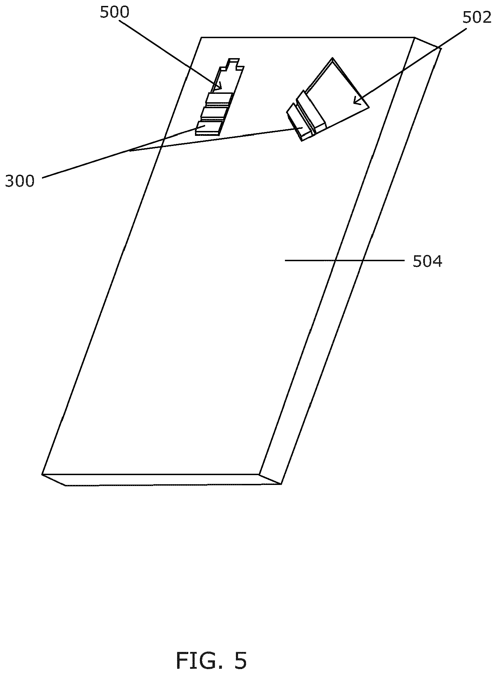

Continued reference is made to FIG. 4 with additional reference to FIG. 5 to describe an example of indicating a status at the portable electronic device 100. In the present example, a first tactile status indicator 500 that indicates a strength of the battery and a second tactile status indicator 502 that indicates a signal strength of the wireless network are provided on a back 504 of the portable electronic device 100. The status indication application 200 determines at 400 a status associated with the device power, which is a battery level in this example, and communication with a wireless network, which is signal strength in this example. The tactile status indicators 500, 502 are actuated 402 to indicate a status, as shown in FIG. 5. The first tactile status indicator 500 includes three projections 300 in a tactilely detectable position to indicate a battery level of approximately 60 percent, since three of the five projections are tactilely detectable. The second tactile status indicator 502 includes two projections 300 in a tactilely detectable position to indicate a signal strength of approximately 40 percent, since two of the five projections are tactilely detectable.

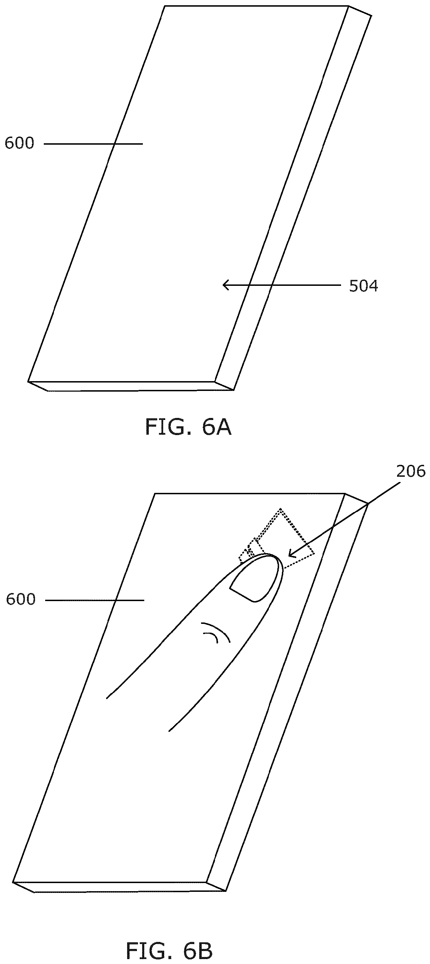

Continued reference is made to FIG. 4 with additional reference to FIGS. 6A and 6B to describe another example of indicating a status at the portable electronic device 100. In the present example, a flexible membrane 600 extends over at least a portion of the back 504 of the portable electronic device 100. A status is determined at 400 and the tactile status indicator 206, which is provided on the back 504 of the portable electronic device 100, is actuated at 402 to indicate a signal strength of the wireless network. The flexible membrane 600 covers the tactile status indicator 206 so that the tactile status indicator 206 is not visually detectable, as shown in FIG. 6A. However, when the status indicator 206 is actuated, it may be tactilely detected by the user, as depicted in FIG. 6B.

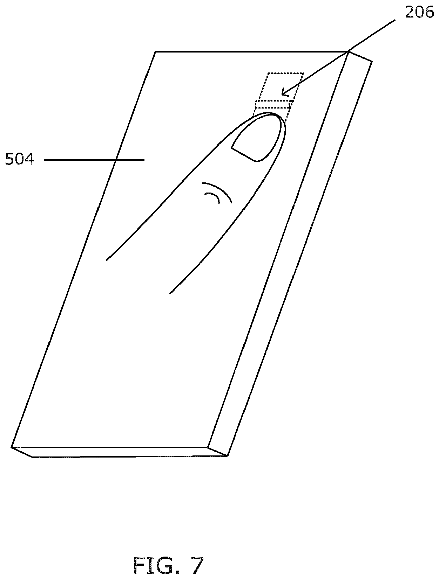

Continued reference is made to FIG. 4 with additional reference to FIG. 7 to describe another example of indicating a status at the portable electronic device 100. In the present example, the tactile status indicator 206 is a material that has a surface texture that may be electrically controlled. In the present example, the material is located on the back 504 of the portable electronic device 100. When the status indication application 200 determines 400 a status associated with the wireless network, such as signal strength, the tactile status indicator 206 is actuated at 402 to change a texture at the back 504 of the portable electronic device 100 to indicate the status. The tactile status indicator 206 causes the material to harden locally for a period of time. The hardened portion of the material may not be detected visually; however, it may be detected tactilely, as shown in FIG. 7.

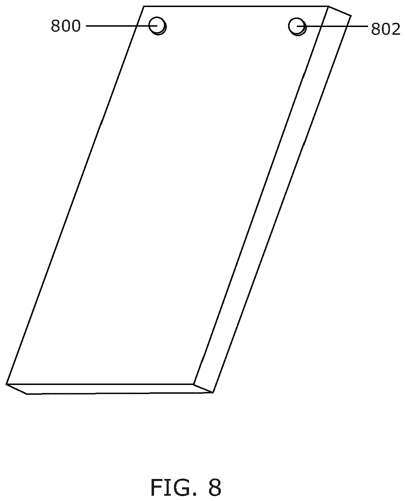

Continued reference is made to FIG. 4 with additional reference to FIG. 8 to describe another example of indicating a status at the portable electronic device 100. In the present example, a first tactile status indicator 800 that is a single projection 300 indicates arrival of one or more new electronic messages, which belong to a category of messages such as messages received from a particular address, or messages received at a personal email account, for example. A second tactile status indicator 802 that is also a single projection 300 indicates arrival of one or more voicemail messages. The status indication application 200 determines at 400 a status associated with the category of messages in the messaging application and the voicemail application. The first tactile status indicator 800 and the second tactile status indicator 802 are then actuated at 402 to change a texture at the surface of the portable electronic device 100 for a period of time to indicate the status of the indicators 800, 802.

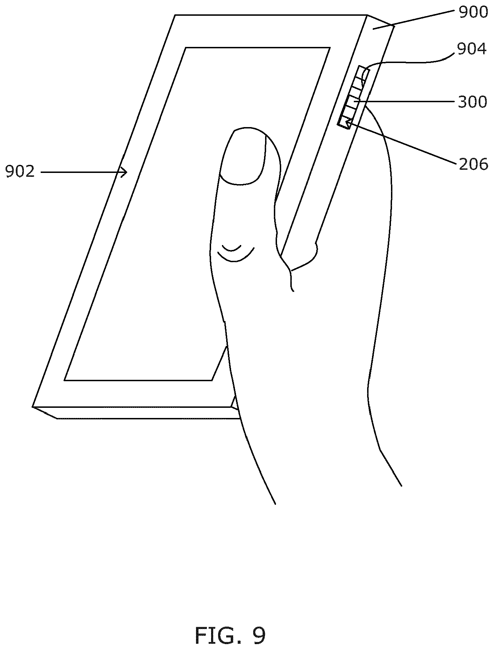

Continued reference is made to FIG. 4 with additional reference to FIG. 9 to describe another example of indicating a status at the portable electronic device 100. In the present example, the tactile status indicator 206 is provided on a side 900 of a housing 902 and at least partly aligned with opening 904 of the portable electronic device 100. The status indication application 200 determines 400 a status associated with the device volume, which is a volume level in this example. The tactile status indicator 206 is then actuated at 402 to change a texture at the side 900 to indicate the status.

In addition to being actuable to indicate a status, the projections 300 of the tactile status indicator 206 may also detect a user input in the form of a touch or a pressure. When a user input is received, the volume may be increased or decreased in response. Therefore, the tactile status indicator 206 in the example of FIG. 9 functions as both a volume adjustment device and a status indication device. The tactile status indicator 206 facilitates tactile adjustment of the volume without requiring the user to look at a graphic indicator.

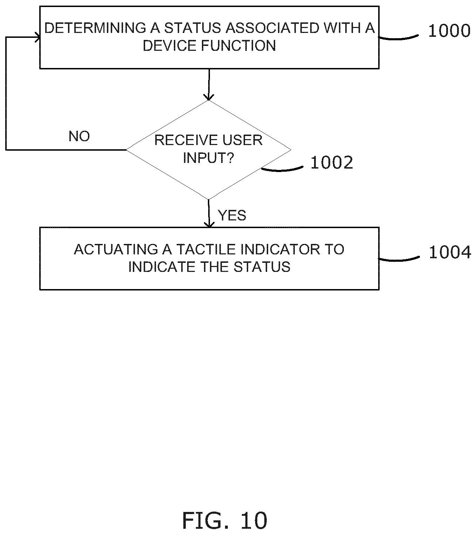

A flow chart illustrating another example method of indicating a status at the portable electronic device 100 is shown in FIG. 10. The steps of FIG. 10 may be carried out by routines or subroutines of software executed by, for example, the processor 102. Coding of software for carrying out such steps is well within the scope of a person of ordinary skill in the art given the present description.

The status indication application 200 determines at 1000 a status associated with a device function. The device function may be communication with the wireless network, powering the portable electronic device 100, volume control or electronic messaging, for example. When a user input is received at 1002, the tactile status indicator is actuated at 1004 to change a texture at the surface of the portable electronic device 100 for a period of time. When no user input is received 1002, the status indication application 200 again determines at 1000 a status associated with a device function according to a status determination schedule. The user input may be a user touch received by a capacitive touch surface, for example.

In one example, the methods of FIG. 4 and FIG. 10 are performed when the user is holding the portable electronic device 100. When the portable electronic device 100 is not being held, such as when the portable electronic device 100 is located on a table operating in speaker phone mode, or received in a holster, the method is not performed. Methods and apparatus for determining when the portable electronic device 100 is being held by a user's hands are know in the art and will not be described further here.

The example tactile status indicators disclosed herein have been shown on a surface of a portable electronic device 100. Tactile status indicators may also be provided on an accessory such as a clip, or an alerting device, for example. The status may be determined at the portable electronic device 100 and the tactile status indicator(s) 206 of the accessory may receive status information wirelessly.

It will be appreciated that the device functions for which status may be indicated are not limited to those described herein. Status information associated with any function or application may be indicated. For example, in a messaging application, a number of new messages may be indicated when a device is powered up or removed from a holster, or in a GPS-based application, location of a co-worker's device within a predetermined range of the portable electronic device may be indicated. The portable electronic device 100 may indicate completion of tasks or may indicate tasks that require attention including GPS location status, a completed download, an overdue calendar appointment, network roaming charge or a depletion of minutes, for example.

Providing a tactile indication of signal strength and power level while the user is participating in a telephone call allows the user to be aware of any reduction in signal strength or power level without having to interrupt the call to look at the display. The user may then be able to move to a location where the signal strength is greater or end the call before the call is unintentionally dropped.

Further, by providing a tactile indication of volume level, the user may be made aware of the current volume so that when the volume is at a maximum the user will be able to evaluate whether or not the caller's voice is sufficiently audible and end or continue the call, rather than continuously attempt to increase the volume, which may be frustrating.

In addition, by providing a tactile indication associated with a messaging application, the user may immediately and discreetly be made aware of an important message. When the portable electronic device is operating in a silent mode, or when it would not be appropriate to visually check the device status, the method and device described herein provides one or more device status indication(s) in a discreet and timely manner.

The above-described embodiments are intended to be examples only. Alterations, modifications and variations can be effected to the particular embodiments by those of skill in the art without departing from the scope of the present invention, which is defined solely by the claims appended hereto.

## Claims

1. A method comprising:
determining a status associated with a function of a portable electronic device (100); and
actuating a tactile status indicator (206) to change a texture at a surface (302) of an accessory of the portable electronic device (100) for a period of time to indicate the status,
wherein the surface (302) is part of a housing of the accessory,
and the accessory receives status information wirelessly from the portable electronic device (100).

2. A method as claimed in claim 1, wherein the function is one of:
communication with a wireless network, powering the portable electronic device (100), volume control of the portable electronic device (100) and a device application.

3. A method as claimed in any of claims 1 or 2, wherein the function is a messaging application of the portable electronic device (100) and the tactile status indicator (206) indicates when a new message belonging to a category of messages is received.

4. A method as claimed in any previous claim, wherein a flexible membrane (600) covers the surface (302) to hide the tactile status indicator (206),

5. A method as claimed in any previous claim, wherein the period of time is when a telephone application is active.

6. A method as claimed in any previous claim, wherein the period of time begins when the status is determined and ends when there is a change in the status.

7. A method as claimed in any previous claim, wherein the status of the function of the portable electronic device (100) is determined when there is a change in the device function.

8. A system comprising a portable electronic device (100) and an accessory:
wherein the portable electronic device (100) comprises a processor (102) for executing a program stored in memory to determine a status associated with a function of the portable electronic device (102); and wherein the portable electronic device (102) is configured to transmit status information wirelessly corresponding to the determined status to the accessory,
wherein the accessory is configured to receive said status information, and
comprises a housing with a tactile status indicator (206) for changing a texture at a surface (302) of the housing for a period of time to indicate the status.

9. The system as claimed in claim 8, wherein the device function Is one of:
communication with a wireless network, powering the portable electronic device (100), volume control of the portable electronic device (100) and a device application.

10. A computer-readable medium comprising instructions executable on a processor (102) of a portable electronic device for implementing the method of any of claims 1 to 7 on the system of any of claims 8 or 9.

## Patentansprüche

1. Verfahren, umfassend:
Bestimmen eines Status, der einer Funktion einer tragbaren elektronischen Vorrichtung (100) zugeordnet ist; und
Betätigen eines Taststatusindikators (206), um eine Textur an einer Oberfläche (302) eines Zubehörs der tragbaren elektronischen Vorrichtung (100) für einen Zeitraum zu ändern, um den Status anzuzeigen,
wobei die Oberfläche (302) Teil eines Gehäuses des Zubehörs ist,
und das Zubehör Statusinformationen drahtlos von der tragbaren elektronischen Vorrichtung (100) empfängt.

2. Verfahren nach Anspruch 1, wobei die Funktion eine der folgenden ist:
Kommunikation mit einem drahtlosen Netzwerk, Stromversorgung der tragbaren elektronischen Vorrichtung (100), Lautstärkeregelung der tragbaren elektronischen Vorrichtung (100) und einer Vorrichtungsanwendung.

3. Verfahren nach einem der Ansprüche 1 oder 2, wobei die Funktion eine Nachrichtenanwendung der tragbaren elektronischen Vorrichtung (100) ist und die Taststatusanzeige (206) anzeigt, wann eine neue Nachricht, die zu einer Gruppe von Nachrichten gehört, empfangen wird.

4. Verfahren nach einem vorhergehenden Anspruch, wobei eine flexible Membran (600) die Oberfläche (302) bedeckt, um die Taststatusanzeige (206) zu verbergen.

5. Verfahren nach einem vorhergehenden Anspruch, wobei der Zeitraum ist, wenn eine Telefonanwendung aktiv ist.

6. Verfahren nach einem vorhergehenden Anspruch, wobei der Zeitraum beginnt, wenn der Status bestimmt wird, und endet, wenn es zu einer Änderung des Status kommt.

7. Verfahren nach einem vorhergehenden Anspruch, wobei der Status der Funktion der tragbaren elektronischen Vorrichtung (100) bestimmt wird, wenn eine Änderung der Vorrichtungsfunktion vorliegt.

8. System, umfassend eine tragbare elektronische Vorrichtung (100) und ein Zubehör:
wobei die tragbare elektronische Vorrichtung (100) einen Prozessor (102) zum Ausführen eines im Speicher gespeicherten Programms umfasst, um einen Status zu bestimmen, der einer Funktion der tragbaren elektronischen Vorrichtung (102) zugeordnet ist; und wobei die tragbare elektronische Vorrichtung (102) konfiguriert ist, um Zustandsinformationen entsprechend dem bestimmten Status des Zubehörs drahtlos zu übertragen,
wobei das Zubehör
konfiguriert ist, um die Statusinformationen zu empfangen, und
ein Gehäuse mit einer Taststatusanzeige (206) zum Ändern einer Textur an einer Oberfläche (302) des Gehäuses für einen Zeitraum umfasst, um den Status anzuzeigen.

9. System nach Anspruch 8,
wobei die Vorrichtungsfunktion eine der folgenden ist:
Kommunikation mit einem drahtlosen Netzwerk, Stromversorgung der tragbaren elektronischen Vorrichtung (100), Lautstärkeregelung der tragbaren elektronischen Vorrichtung (100) und einer Vorrichtungsanwendung.

10. Computerlesbares Medium, umfassend Anweisungen, die auf einem Prozessor (102) einer tragbaren elektronischen Vorrichtung ausführbar sind, um das Verfahren nach einem der Ansprüche 1 bis 7 auf dem System nach einem der Ansprüche 8 oder 9 durchzuführen.

## Revendications

1. Procédé comprenant les étapes consistant à :
déterminer un état associé à une fonction d'un dispositif électronique portable (100) ; et
actionner un indicateur d'état tactile (206) pour changer une texture sur une surface (302) d'un accessoire du dispositif électronique portable (100) pendant une période de temps pour indiquer l'état,
dans lequel la surface (302) fait partie d'un boîtier de l'accessoire, et
l'accessoire reçoit des informations d'état par sans fil à partir du dispositif électronique portable (100).

2. Procédé tel que revendiqué dans la revendication 1, dans lequel la fonction est l'une parmi :
une communication avec un réseau sans fil, une alimentation du dispositif électronique portable (100), une commande de volume du dispositif électronique portable (100) et une application de dispositif.

3. Procédé tel que revendiqué dans l'une des revendications 1 et 2, dans lequel la fonction est une application de messagerie du dispositif électronique portable (100) et l'indicateur d'état tactile (206) indique le moment où un nouveau message appartenant à une catégorie de messages est reçu.

4. Procédé tel que revendiqué dans l'une des revendications précédentes, dans lequel une membrane flexible (600) couvre la surface (302) pour cacher l'indicateur d'état tactile (206).

5. Procédé tel que revendiqué dans l'une des revendications précédentes, dans lequel la période de temps est la durée pendant laquelle une application téléphonique est active.

6. Procédé tel que revendiqué dans l'une des revendications précédentes, dans lequel la période de temps commence lorsque le statut est déterminé et se termine lorsqu'il y a un changement d'état.

7. Procédé tel que revendiqué dans l'une des revendications précédentes, dans lequel l'état de la fonction du dispositif électronique portable (100) est déterminé lorsqu'il y a un changement de la fonction de dispositif.

8. Système comprenant un dispositif électronique portable (100) et un accessoire :
dans lequel le dispositif électronique portable (100) comprend un processeur (102) pour exécuter un programme stocké en mémoire afin de déterminer un état associé à une fonction du dispositif électronique portable (102) ; et dans lequel le dispositif électronique portable (102) est configuré pour transmettre des informations d'état par sans fil correspondant à l'état déterminé à l'accessoire,
dans lequel l'accessoire est configuré pour recevoir lesdites informations d'état, et comprend un boîtier avec un indicateur d'état tactile (206) pour changer une texture sur une surface (302) du boîtier pendant une période de temps afin d'indiquer l'état.

9. Système tel que revendiqué dans la revendication 8, dans lequel la fonction de dispositif est l'une parmi :
une communication avec un réseau sans fil, une alimentation du dispositif électronique portable (100), une commande de volume du dispositif électronique portable (100) et une application de dispositif.

10. Support lisible par ordinateur comprenant des instructions pouvant être exécutées sur un processeur (102) d'un dispositif électronique portable pour mettre en oeuvre le procédé de l'une des revendications 1 à 7 sur le système de l'une des revendications 8 et 9.
